# EUROPÄISCHE PATENTANMELDUNG

(11) **EP 3 851 824 A1**
(43) Veröffentlichungstag der Anmeldung: **21.07.2021**
(21) Anmeldenummer: 21151095.3
(22) Anmeldetag: 12.01.2021
(51) Int. Cl.: G01M 3/16, G01M 3/24, F25B 49/00, G01M 3/20

(54) **SENSORVERSCHALTUNG**

(30) Priorität: 20.01.2020 DE 102020101163
(71) Anmelder: Vaillant GmbH, 42859 Remscheid (DE)
(72) Erfinder: Forner, Pascal, 42857 Remscheid (DE)
(74) Vertreter: Popp, Carsten

(57) **Zusammenfassung**

Gassensorsystem für die Detektion austretenden Arbeitsfluids aus einer Leckage innerhalb eines Wärmepumpengehäuses, wobei mindestens drei Detektoren verwendet werden, deren Messmethodiken verschiedene physikalisch-chemischer Prinzipien der Gasanalyse nutzen und die mittels einer M-aus-N-Schaltung miteinander verknüpft sind, wobei M und N ganze Zahlen sind, N größer als M ist und mindestens den Wert 3 hat.

## Beschreibung

Die Erfindung betrifft die sichere Detektion von Leckagen in Wärmepumpen, die mit brennbaren oder giftigen Kältemitteln betrieben werden.

Solche Leckagen sind oft nur schwer zu entdecken. Die verschiedenen Ursachen können auch unterschiedliche Auswirkungen und unterschiedliche Leckraten zur Folge haben. Aus diesem Grund werden oft mehrere Detektionsmethoden parallel und redundant verwendet. Deren Zuverlässigkeit und deren Ansprechverhalten sind jedoch sehr unterschiedlich, oft kann nur indirekt auf Leckagen geschlossen werden.

Darüber hinaus sind sowohl die Detektionsmethoden als auch die Methoden, mit denen aus indirekten Messungen Schlüsse gezogen werden, aus prinzipiellen Gründen ungenau. Zum einen werden nicht alle Leckagen von allen Methoden zuverlässig erkannt, zum anderen gibt es auch Fehlalarme. Auch die Detektionszeiten sind unterschiedlich, wenn ein Sensor zur Detektion so angebracht ist, dass ein leckagebedingt austretendes Arbeitsfluid zunächst eine bestimmte Wegstrecke durch Diffusion zurücklegen oder sogar erst noch verdampfen muss.

Zuletzt muss man die Detektionsmethoden auch testen können, um sicherzugehen, dass sie auch nach längerer Zeit noch voll funktionstüchtig sind. Ansonsten könnte es passieren, dass Anlagen im Regelbetrieb zu oft oder im Krisenfall überhaupt nicht abschalten oder dass das Testen im laufenden Betrieb nicht ohne Risiko möglich ist.

So beschreibt die EP 3 477 274 A1 ein System zur Leckage-Erkennung eines geschlossenen thermodynamischen Kreisprozesses, bei dem Schwingungen mittels einer Vielzahl von Beschleunigungssensoren analysiert und ausgewertet werden, und ein für Leckagen typisches Klangmuster oder Schwingungsmuster herausgefiltert wird. Das physikalische Prinzip ist eine akustische Erkennung.

Die EP 3 486 583 A1 beschreibt ein System, bei dem Kältekreis ein fluoreszierendes Mittel beigemischt wird, welches an Leckagestellen fluoreszierend aufleuchtet, wobei die Leckage mittels einer Kamera erkannt wird. Das physikalische Prinzip ist eine optische Erkennung.

Die DE 44 34 814 A1 beschreibt einen infrarotspektroskopischen Sensor für Gase. Hierbei werden die Gase mittels eines Spektrometers im infraroten Spektralbereich anhand ihrer gasspezifischen Absorption selektiv nachgewiesen.

Die DE 10 2013 007 872 B4 beschreibt einen elektrochemischen Gassensor. Hierbei wird in einem Sensorgehäuse eine reversible chemische Reaktion mit dem Gas durchgeführt. Hierzu wird das Gas mit einem Elektrolyten, vorzugsweise einer ionischen Flüssigkeit, die weder hygroskopisch ist noch die Tendenz zum Verdampfen aufweist, in Kontakt gebracht. Dieser Elektrolyt befindet sich in einer Messzelle, die ferner eine Arbeits- oder Messelektrode und die Gegen- oder Hilfselektrode enthält. Die Messzelle kann dabei gasseitig offen oder mit einer gasdurchlässigen Membran verschlossen sein. Aus der charakteristischen Potenzialdifferenz zwischen den Elektroden kann auf den Gehalt des jeweiligen Gases geschlossen werden. Das Messprinzip ist dabei ein elektrochemisches.

Die DE 4428155 C2 und die DE 10 2009 054 435 A1 beschreiben Gassensoren auf Basis anorganischer Metalloxid-Halbleiter (MOX). Bei Kontakt derartiger als poröser Festkörper ausgebildeter Gassensoren mit reduzierenden Stoffen, also beispielsweise Propan aus R290, ändert sich die elektrische Leitfähigkeit des MOX an dessen Oberfläche. Diese Änderung der Leitfähigkeit wird gemessen und dient zur Detektion oder Konzentrationsbestimmung solcher reduzierender Gase.

Es sind auch Systeme bekannt geworden, deren Fähigkeit zur Detektion von Gasen nicht auf einer Änderung der elektrischen Leitfähigkeit, sondern auf der thermischen Leitfähigkeit von MOX oder von Aktivkohle in der Folge einer Adsorption beruht. Dies gilt vor allem bei niedrigen Temperaturen.

Auch katalytisch aktive und/oder katalytisch passive Messelemente in katalytischen Gassensoren oder Wärmetönungssensoren, sogenannte Pellistoren, sind bekannt und werden beispielsweise in der DE 35 13 033 A1 beschrieben. Auch Feldeffekttransistoren mit gasartigen Halleiter-Elementen, beispielsweise gasartensensitiven Gate-Substraten in Halbleiter-Gassensoren sind bekannt.

Weiterhin sind Verfahren zur Überprüfung eines Gassensors bekannt geworden. Die DE 10 2016 003 283 A1 und DE 10 2016 003 284 A1 beschreiben beide Verfahren zur Überprüfung eines Gassensors und eine Gasmessvorrichtung mit einer Prüfvorrichtung zur Überprüfung eines Gassensors. Hierbei wird mittels einer Dosiervorrichtung ein Prüfgas verwendet, mit dem geprüft wird, ob ein Gaszutritt des Prüfgases zum Sensor gegeben ist, und ob dieser Sensor eine quantitativ korrekte Messung durchführt und die vorgegebenen Schwellenwerte für einen Alarm einhält. Die Methode steht für verschiedene genannte Gassensoren zur Verfügung.

Keines dieser Systeme ist allein in der Lage, schnell, sicher, zuverlässig und fehlerfrei Leckagen zu erkennen. Es wurde aber gefunden, dass eine Kombination mehrerer dieser Messmethoden zu den gewünschten Ergebnissen führen kann. Methoden der Auswertungen für den Schutz von Geräten, die mit mehreren Schutzeinrichtungen geschützt werden sollen, sind im Stand der Technik zahlreich bekannt.

Die DE-OS 20 55 144 beschreibt eine Auswerteeinrichtung zur Abschaltung eines durch mehrere Schutzeinrichtungen geschützten Geräts, bei der eine Abschaltung nur möglich ist, wenn zwei von drei Schutzeinrichtungen ansprechen, wobei die Schutzeinrichtungen an die Eingänge einer Verknüpfungsschaltung angeschlossen sind, bei der jeweils zwei der drei Eingänge zyklisch an eine UND-Verknüpfungsschaltung angeschlossen sind und diesen UND-Verknüpfungsschaltungen eine ODER-Verknüpfungsschaltung nachgeschaltet ist. Jeder UND-Verknüpfungsschaltung ist dabei ein Überwachungsglied so zugeordnet, dass dieses anspricht, wenn gleichzeitig an einem der beiden Eingänge ein Signal vorhanden und am anderen kein Signal vorhanden ist.

Mittels dieser Technologie ist es möglich, die Prüfung der Schutzeinrichtung während des Betriebs ohne Auftrennen der Auslöseleitungen zu ermöglichen und bei einem inneren Fehler einer Schutzeinrichtung eine Auslösung zu verhindern. Eine während der Prüfung erfolgende echte Schutzauslösung führt dagegen zu einer ordnungsgemäßen Schalterbetätigung. Auch die Möglichkeit einer m-aus-n-Auswerteeinrichtung wird vorgestellt, wie sie grundsätzlich auch bereits aus der DE-OS 15 37 532 bekannt geworden ist. Nachteilig ist, dass auf diese Weise nur elektrische Geräte geschützt werden können.

Die DE-OS 25 52 666 beschreibt eine logische Schaltung zur Verwendung mit Brennersteueranlagen. Deren Aufgabe ist es, eine mögliche Explosionsgefahr zu erkennen und zu verhindern, welche dadurch entsteht, dass Brennstoff in eine Brennkammer einströmt, ohne dass er entzündet wird oder nachdem die Flamme erloschen ist. Als Signalquellen werden eine erste und eine zweite Photomodulschaltung, bzw. auch mehrere gleichartige, deren jede eine Strahlungsquelle und einen Strahlungsfühler enthält. In einer "Zwei-aus drei-Code" Logikschaltung muss dabei nur verhindert werden, dass die Schaltung nicht nur aufgrund von Zeitunterschieden auslöst. Hierzu ist eine Zeittoleranz geschaltet.

Die DE 36 43 396 A1 beschreibt eine elektronische Steuereinrichtung für eine DieselBrennkraftmaschine, bei der das zur Weiterverarbeitung benutzte Drehzahlsignal aus einer zwei aus N-Auswahl gewonnen wird. Als Sensoren, aus denen das Drehzahlsignal abgeleitet wird, dienen der Luftmassensensor und der Spritzbeginnsensor, auch andere ermittelte Werte können für die Berechnung herangezogen werden. Falls das Drehzahlsignal ausfällt, werden die Ersatzsignale für einen Notbetrieb verwendet, alle Signale müssen jedoch aufwendig aufbereitet werden. Mittels einer zwei-aus-drei-Auswahlschaltung werden die aufbereiteten Sensorsignale miteinander verglichen. Zwar werden die Signale, die das eigentliche Drehzahlsignal wenigstens zeitweise ersetzen sollen, dabei aus unterschiedlichen Quellen bezogen, was auch unterschiedliche physikalische Messprinzipien umfassen kann, sie können das Drehzahlsignal jedoch nicht überstimmen, sondern sind nur eine temporäre Ausfallsicherung und nicht gleichwertig oder komplementär.

Die Aufgabe der Erfindung ist daher, ein verbessertes System von Gassensoren für die Detektion einer Leckage innerhalb eines Wärmepumpengehäuses bereitzustellen, mit dem austretendes Arbeitsfluid sicher, zuverlässig und frei von Fehlalarmen detektiert wird.

Die Erfindung löst die Aufgabe mittels mindestens dreier Detektoren, deren Messmethodiken verschiedene physikalische Prinzipien der Gasanalyse nutzen und die mittels einer M-aus-N-Schaltung miteinander verknüpft sind, wobei M und N ganze Zahlen sind, N größer als M ist und mindestens den Wert 3 hat.

In einer Ausgestaltung der Erfindung werden drei Detektoren verwendet, die ein Leckagesignal ausgeben, wenn mindestens zwei davon ein positives Signal ausgeben. Weitere Ausgestaltungen betreffen die Sensortypen und deren physikalisch-chemisches Messprinzip. So ist vorgesehen, dass
- einer der N Detektoren ein Sensor ist, der das Prinzip der akustischen Erkennung verwendet, oder
- einer der N Detektoren ein Sensor ist, der das Prinzip der optischen Erkennung verwendet, oder
- einer der N Detektoren ein Sensor ist, der das Prinzip der infrarotspektroskopischen Erkennung verwendet, oder
- einer der N Detektoren ein Sensor ist, der das Prinzip der Änderung der elektrischen Leitfähigkeit anorganischer Metalloxid-Halbleiter (MOX) verwendet, oder
- einer der N Detektoren ein Sensor ist, der das Prinzip der Änderung der thermischen Leitfähigkeit eines Adsorptionsmittels verwendet.

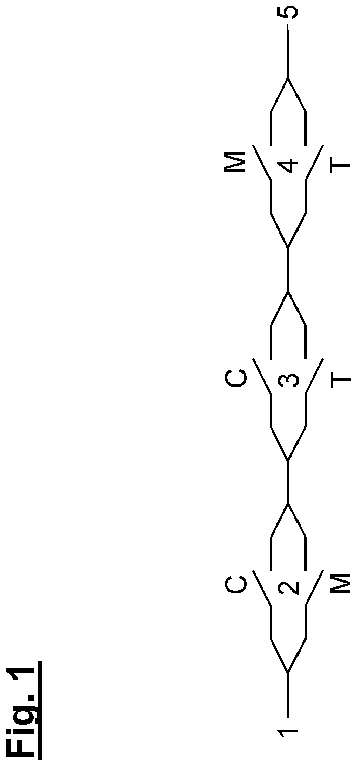

Die Erfindung wird nachfolgend anhand einer Prinzipskizze näher erläutert. Fig. 1 zeigt eine Zwei-aus-Drei-Schaltung mit den Sensoren C, T und M. Die Sensoren nutzen dabei physikalisch verschiedene Messprinzipien, C ist ein katalytisch wirkender Sensor, T ein Sensor der thermischen Leitfähigkeit und M ein Metalloxidsensor, wobei die Erfindung aber nicht auf diese Typen oder deren Kombination beschränkt ist.

Die Zwei-aus-Drei-Schaltung löst einen Alarm aus, sobald eine Verbindung zwischen den Punkten 1 und 5 der Signalleitung entsteht. Hierzu wird die Signalleitung in N=3 Verzweigungen 2, 3 und 4 geführt, die anschließend jeweils wieder zusammengeführt werden. In der Verzweigung 2 befinden sich die Schalter C und M, in der Verzweigung 3 die Schalter C und T und in der Verzweigung 4 die Schalter M und T.

Sofern also die Sensoren C und M anschlagen, wird das Signal im Schalter 2 doppelt geschlossen, im Schalter 3 über C und im Schalter 3 über M jeweils einfach. Die übrigen Kombinationen verhalten sich analog. Schlägt nur ein Sensor an, bleibt zumindest einer der Schalter offen und es kann kein Signal durchgeleitet werden.

Es ist klar, dass auf dieselbe Weise auch eine Drei-aus-Vier-Schaltung oder eine zwei-ausSchaltung vorgenommen werden können, weiterhin ist es natürlich möglich, dass jeder der verschiedenen Sensoren in sich redundant ausgeführt werden kann, etwa indem auch der T-Sensor aus drei identischen Sensoren in einer Zwei-aus-Drei-Schaltung bestehen kann. Praktisch bedeutet dies, dass auch während des Betriebs ein defekter Sensor ohne Unterbrechung ausgetauscht oder gewartet werden kann.

### Bezugszeichen

- 1: Signaleingang
- 2: Schalter
- 3: Schalter
- 4: Schalter
- 5: Signalausgang
- C: katalytisch wirkender Sensor
- M: Metalloxidsensor
- T: Wärmeleitfähigkeitssensor

## Patentansprüche

1. Gassensorsystem für die Detektion austretenden Arbeitsfluids aus einer Leckage innerhalb eines Wärmepumpengehäuses, **dadurch gekennzeichnet, dass** mindestens drei Detektoren verwendet werden, deren Messmethodiken verschiedene physikalischchemischer Prinzipien der Gasanalyse nutzen und die mittels einer M-aus-N-Schaltung miteinander verknüpft sind, wobei M und N ganze Zahlen sind, N größer als M ist und mindestens den Wert 3 hat.

2. Gassensorsystem nach Anspruch 1, **dadurch gekennzeichnet, dass** drei Detektoren verwendet werden, die ein Leckagesignal ausgeben, wenn mindestens zwei davon ein positives Signal ausgeben.

3. Gassensorsystem nach einem der Ansprüche 1 oder 2, **dadurch gekennzeichnet, dass** einer der N Detektoren ein Sensor ist, der das Prinzip der akustischen Erkennung verwendet.

4. Gassensorsystem nach einem der Ansprüche 1 oder 2, **dadurch gekennzeichnet, dass** einer der N Detektoren ein Sensor ist, der das Prinzip der optischen Erkennung verwendet.

5. Gassensorsystem nach einem der Ansprüche 1 oder 2, **dadurch gekennzeichnet, dass** einer der N Detektoren ein Sensor ist, der das Prinzip der infrarotspektroskopischen Erkennung verwendet.

6. Gassensorsystem nach einem der Ansprüche 1 oder 2, **dadurch gekennzeichnet, dass** einer der N Detektoren ein Sensor ist, der das Prinzip der Änderung der elektrischen Leitfähigkeit anorganischer Metalloxid-Halbleiter (MOX) verwendet.

7. Gassensorsystem nach einem der Ansprüche 1 oder 2, **dadurch gekennzeichnet, dass** einer der N Detektoren ein Sensor ist, der das Prinzip der Änderung der thermischen Leitfähigkeit eines Adsorptionsmittels verwendet.
